(19) Europäisches Patentamt
European Patent Office
Office européen des brevets

(11) Veröffentlichungsnummer: **0 685 270 A2**

(12) **EUROPÄISCHE PATENTANMELDUNG**

(21) Anmeldenummer: **95106510.1**

(22) Anmeldetag: **29.04.95**

(51) Int. Cl.6: **B05B 15/04**, B05B 15/12

(30) Priorität: **04.05.94 DE 4415630**

(43) Veröffentlichungstag der Anmeldung:
**06.12.95 Patentblatt 95/49**

(84) Benannte Vertragsstaaten:
**AT CH DE ES FR GB LI NL**

(71) Anmelder: **Herberts Gesellschaft mit beschränkter Haftung**
**Christbusch 25**
**D-42285 Wuppertal (DE)**

(72) Erfinder: **Richter, Bernhard**
**Schimmelsburg 28**
**D-42277 Wuppertal (DE)**

(74) Vertreter: **Türk, Gille, Hrabal, Leifert**
**Brucknerstrasse 20**
**D-40593 Düsseldorf (DE)**

(54) **Verfahren zur Rückgewinnung des Oversprays von wässrigen Überzugsmitteln beim Spritzauftrag in Lackspritzanlagen.**

(57) Beschrieben wird ein Verfahren zur Rückgewinnung des Oversprays von wäßrigen Überzugsmitteln beim Spritzauftrag in Lackspritzanlagen, das die Wiederverwendung des Oversprays im wäßrigen Überzugsmittel ermöglicht. Bei dem Verfahren wird das Overspray in einer wäßrigen Auswaschflüssigkeit aufgefangen, die kontinuierlich in einem oder mehreren Kreisläufen in die Lackspritzanlage zurückgeführt wird, wobei ein Teil der Overspray enthaltenden Auswaschflüssigkeit einem oder mehreren Ultrafiltrationskreisläufen zugeführt wird, Permeat entzogen und zur Ergänzung der Auswaschflüssigkeit zurückgeführt und zumindest ein Teil der im letzten Ultrafiltrationskreislauf umlaufenden Flüssigkeit dem wäßrigen Überzugsmittel wieder zugesetzt oder zu dessen Aufbereitung verwendet wird. Dabei sind bei Beginn des Spritzauftrags die einzelnen Kreisläufe mit wäßrigen Flüssigkeiten gefüllt, die zumindest einzelne der membrangängigen Anteile des Überzugsmittels annähernd in einer solchen Konzentration bzw. in solchen Konzentrationsverhältnissen enthalten, die sich beim Betrieb der Lackspritzanlagen unter den üblichen Betriebsbedingungen und Konzentrationen als stationärer Zustand einstellen.

Die Erfindung betrifft ein Verfahren zur Rückgewinnung des Oversprays von wäßrigen Überzugsmitteln mit bei der Ultrafiltration membrangängigen wasserlöslichen Komponenten beim Spritzauftrag in Lackspritzanlagen, wie Spritzkabinen. Bei dem Verfahren kann das Overspray in das in der Spritzkabine verwendete wäßrige Überzugsmittel rezyklisiert werden.

Es ist bekannt, das Overspray (Lacknebel) an mit Wasser berieselten Wandungen von Spritzkabinen zu absorbieren und das im Kreislauf geführte Berieselungswasser über Ultrafilter aufzubereiten. Dadurch wird eine Trennung der Waschflüssigkeit in gereinigtes Abwasser und aufkonzentriertes Overspray erreicht. Das gereinigte Abwasser kann als Waschflüssigkeit und das aufkonzentrierte Overspray als rezyklisierter Lack wiederverwendet werden. Diese Verfahren werden in der DE-A-32 27 227, DE-C2-33 32 457, DE-A1-34 28 300, DE-A1-42 13 671, EP-A1-0 536 648 und WO 91/09 666 beschrieben.

In allen den oben genannten Verfahren wird davon ausgegangen, daß als nicht-flüchtige Bestandteile keine membrangängigen Komponenten im wäßrigen Überzugsmittel enthalten sind. Beim Arbeiten mit wäßrigen Überzugsmitteln, welche wasserlösliche Bestandteile enthalten, welche bei der Ultrafiltration in das Permeat gelangen, wie beispielsweise wasserlösliche Vernetzungsmittel (z.B. Cymel 327, eingetragenes Warenzeichen) oder Bindemittel (z.B. Polyvinylalkohol mit Molekulargewichten bis zu 5000), verändert sich die Zusammensetzung des Überzugsmittels. Das bedeutet, in der Anfangsphase des Verfahrens wird über einen kürzeren oder längeren Zeitraum ein sich dauernd veränderndes Überzugsmittel appliziert. Zwar wird in der oben genannten DE-A1-32 27 227 ein Filtrationsaggregat beschrieben, das Membranen verschiedener Durchlässigkeit besitzt, wobei die Membranen mit dem kleinsten Porendurchmesser die Wirkung einer Hyperfiltration oder umgekehrten Osmose besitzen. Das bedeutet jedoch, daß neben der Ultrafiltration ein weiteres Aggregat, das höhere Drücke benötigt, eingesetzt werden muß.

H. Sutter beschreibt in JOT 1992, Heft 10, Seite 35, "Wasserlackrecycling bei der Spritzlackierung, Teil 1: Rückgewinnung über Ultrafiltration", daß bei Einbrennlacksystemen beispielsweise ein Teil der Aminoharze in das Permeat abwandert und daher dem Retentat, das heißt zurückgewonnenen Lack fehlen kann. Bei "geeigneter Bindemittelkombination" entsteht im Laufe der Zeit ein Gleichgewicht, das auch als stationärer Zustand bezeichnet werden kann.

Aufgabe der vorliegenden Erfindung ist die Bereitstellung eines Verfahrens zur Rückgewinnung des Oversprays von wäßrigen Überzugsmitteln, das selbst beim Vorhandensein mehrerer membrangängiger Komponenten zu keiner Veränderung in der Zusammensetzung des rezyklisierten wäßrigen Oversprays führt, wodurch seine Wiederverwertung im wäßrigen Überzugsmittel ermöglicht wird. Es sollen so Stabilitätsprobleme und Veränderungen in der Zusammensetzung des eingesetzten wäßrigen Überzugsmittels vermieden und der Einsatz hochqualitativer und oft empfindlicher wäßriger Überzugsmittel, wie beispielsweise wäßriger Autolacke, im Praxismaßstab ermöglicht werden.

Es hat sich gezeigt, daß diese Aufgabe gelöst werden kann durch das einen Gegenstand der Erfindung darstellende Verfahren zur Rückgewinnung des Oversprays von wäßrigen Überzugsmitteln beim Spritzauftrag in Lackspritzanlagen, beispielsweise Spritzkabinen. Bei dem Verfahren wird das Overspray in einer wäßrigen Auswaschflüssigkeit aufgefangen, die kontinuierlich in einem oder mehreren Kreisläufen in die Lackspritzanlage zurückgeführt wird, wobei ein Teil der Overspray enthaltenden Auswaschflüssigkeit einem oder mehreren Ultrafiltrationskreisläufen zugeführt wird, wobei in den Ultrafiltrationskreisläufen Permeat entzogen und zur Ergänzung der Auswaschflüssigkeit in den Kreisläufen der Lackspritzanlage zurückgeführt wird und zumindest ein Teil der im letzten Ultrafiltrationskreislauf umlaufenden Flüssigkeit dem wäßrigen Überzugsmittel wieder zugesetzt wird oder zu dessen Aufbereitung verwendet wird. Das Verfahren ist dadurch gekennzeichnet, daß bei Beginn des Spritzauftrags die einzelnen Kreisläufe mit wäßrigen Flüssigkeiten gefüllt sind, die zumindest einzelne der membrangängigen Anteile des Überzugsmittels annähernd in einer solchen Konzentration bzw. in solchen Konzentrationsverhältnissen enthalten, die sich beim Betrieb der Lackspritzanlagen unter den üblichen Betriebsbedingungen und Konzentrationen als stationärer Zustand einstellen.

Die genannten Konzentrationen und Konzentrationsverhältnisse können durch Analyse der Kreislaufflüssigkeiten bereits laufender Spitzanlagen oder durch einen Vorversuch ermittelt werden, der unter den beim Spritzlackieren angewendeten Betriebsbedingungen und Konzentrationen an Überzugsmitteln bis zur Gleichgewichtseinstellung durchgeführt wird, wobei sich im Permeat des letzten Ultrafiltrationskreislaufs (C) eine konstante Konzentration an membrangängigen Anteilen des Überzugsmittels einstellt, worauf die bei der Gleichgewichtseinstellung erhaltenen Konzentrationen und Konzentrationsverhältnisse der membrangängigen Anteile ermittelt werden.

Erfindungsgemäß wird das im letzten Ultrafiltrationskreislauf gewonnene Permeat als Gleichgewichtspermeat bezeichnet. Wie bereits erläutert, stellt sich beim kontinuierlichen oder diskontinuierlichen Recycling von Overspray aus wasserverdünnbaren Überzugsmitteln mit wasserlöslichen, ins Permeat gelangenden Bestandteilen im Laufe der Zeit ein stationärer Zustand oder Gleichgewicht ein, in dem sich die Zusammensetzung der Kreisläufe nicht mehr ändert. Dieses Gleichgewicht kann sich in wenigen Zyklen oder in einer längeren Periode einstellen.

Die sich ergebende Gleichgewichtszusammensetzung kann durch übliche bekannte analytische Methoden ermittelt werden. Wasserlösliche Bestandteile im Permeat können beispielsweise mit geeigneten Lösemitteln aus dem Permeat extrahiert und analysiert werden. Eine analytische Methode, die sich für die Quantifizierung eines oder mehrerer wasserlöslicher Bestandteile im Permeat und/oder im Retentat eignet, ist beispielsweise die Auswertung von Infrarot-Aufnahmen z.B. unter Anwendung von Partial Least-Square Methoden (wie beispielsweise in der deutschen Patentanmeldung P 43 28 357.8 beschrieben).

Beim erfindungsgemäßen Verfahren wird die Konzentration der wasserlöslichen, membrangängigen Bestandteile im bei Gleichgewichtseinstellung erzielten Permeat ermittelt, um zu Beginn des eigentlichen Spritzverfahrens und Overspray-Recyclings die verschiedenen Kreisläufe so einzustellen, daß das im letzten Ultrafiltrationskreislauf erhaltene Retentat unmittelbar zum Überzugsmittel zurückgeführt werden kann.

Hierzu ist es möglich die einzelnen Kreisläufe, nämlich die Kreisläufe der Auswaschflüssigkeit für die Lackspritzanlage sowie die Kreisläufe der Ultrafiltrationseinheiten, von vornherein auf eine Konzentration an membrangängigen Anteilen einzustellen, die annähernd der Gleichgewichtskonzentration entspricht. Das Lackierverfahren bedarf auf diese Weise keiner längeren Anlaufperioden.

Die in die Kreisläufe zu füllenden Flüssigkeiten weisen Konzentrationen von mindestens einzelnen membrangängigen Anteilen des Überzugsmittels auf, die annähernd den im Gleichgewichtszustand ermittelten Konzentrationen entsprechen. Es ist beispielsweise dann nicht notwendig sämtliche membrangängigen Anteile in die Kreislaufflüssigkeiten einzuführen, wenn einzelne dieser Anteile leicht analytisch feststellbar und daher im Verlauf des Rückführverfahrens oder der Wiederaufbereitung des Überzugsmittels leicht ergänzt werden können.

Zur Ermittlung der Gleichgewichtskonzentration kann das Verfahren in der technisch in Betrieb zu setzenden Anlage mit minimalen Mengen an Auswaschflüssigkeit und Kreislaufflüssigkeit durchgeführt werden. Es ist aber auch möglich das Verfahren in kleineren Anlagen zu simulieren und so die Konzentrationen im Gleichgewichtspermeat festzustellen.

Schließlich ist es aber auch möglich eine größere Menge des Überzugsmittels zu ultrafiltrieren und das Gleichgewichtspermeat ohne vorherige Feststellung der Gleichgewichtszusammensetzung direkt für den Beginn des Overspray-Recyclings zu verwenden.

Das erfindungsgemäße Verfahren kann in üblichen Lackspritzanlagen, wie Spritzkabinen, mit einem oder mehreren Ultrafiltrationskreisläufen durchgeführt werden. Derartige Verfahren werden in den eingangs genannten Literaturstellen beschrieben.

Bei diesen Verfahren wird eine Lackauftragsvorrichtung, insbesondere eine oder mehrere Spritzkabinen mit einer wäßrigen Auswaschflüssigkeit berieselt, die aufgefangen und kontinuierlich in einem Kreislauf in die Spritzkabine zurückgeführt wird. Ein Teil der Overspray enthaltenden Auswaschflüssigkeit wird einem Ultrafiltrationskreislauf zugeführt, wobei Permeat entzogen und zur Ergänzung der Auswaschflüssigkeit in den Spritzkabinen-Kreislauf zurückgeführt wird. Die in dem ersten Ultrafiltrationskreislauf umlaufende Flüssigkeit kann einem oder mehreren weiteren Ultrafiltrationskreisläufen zugeführt werden, deren Permeat ebenfalls zur Ergänzung der Auswaschflüssigkeit im Spritzkabinen-Kreislauf zurückgeführt werden kann. Die umlaufende Flüssigkeit kann weiteren Ultrafiltrationseinheiten zugeführt oder zur Ergänzung bzw. Aufbereitung des wäßrigen Überzugsmittels verwendet werden.

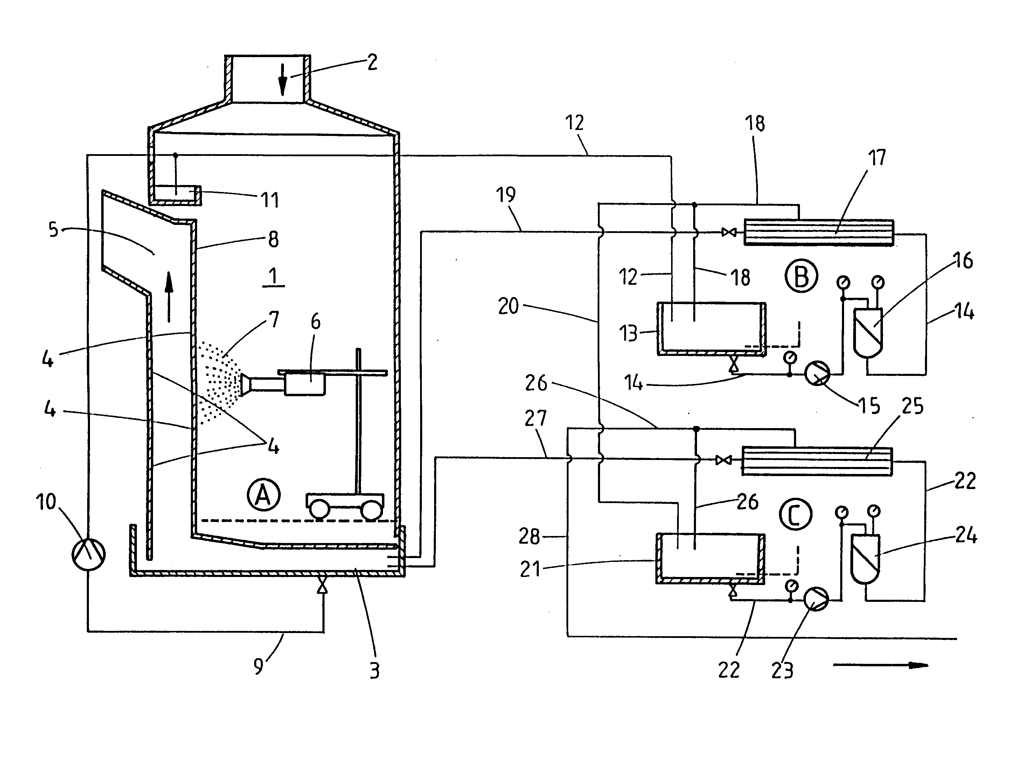

Ein Beispiel für eine spezielle Ausführungsform, die erfindungsgemäß verwendet werden kann, wird in der DE-A-42 13 671 entsprechend der beigefügten Figur beschrieben. Die Figur, die eine bevorzugte Ausführungsform der Erfindung darstellt, gibt ein Fließschema wieder, das einen Spritzkabinenkreislauf (A) und zwei Ultrafiltrationskreisläufe (B und C) zeigt. Die Spritzkabine 1 wird über einen Zuluftkanal 2 von oben her mit Luft gespeist, welche am Boden 3 der Spritzkabine in einen mit Prallwänden 4 versehenen Abluftkanal 5 eingeführt werden kann.

Das beim Spritzen mit dem Spritzaggregat 6 anfallende Overspray 7 (Spritznebel) wird an der Naßrieselwand 8 aufgefangen. Die an der Naßrieselwand 8 nach unten abfließende Berieselungsflüssigkeit wird im wannenförmig ausgebildeten Boden 3 der Spritzkabine aufgefangen und von dort über die Leitung 9, mittels einer Pumpe 10 und einem Überlauf 11 dem oberen Ende der Naßrieselwand 8 wieder zugeführt (Kabinenkreislauf A).

Von der in der Figur dargestellten Leitung 9 zweigt eine Leitung 12 ab, die zu einem Behälter 13 führt, der zur Aufnahme von Ultrafiltrations-Retentat bestimmt ist. Die aus der Leitung 12 mit Overspray angereicherte Berieselungsflüssigkeit wird mit der im Behälter 13 enthaltenen Kreislaufflüssigkeit vermischt.

Aus dem Behälter 13 wird das Ultrafiltrations-Retentat zusammen mit der aus dem Kreislauf A eingeführten Flüssigkeit über die Leitung 14, mittels einer Pumpe 15 und über ein gegebenenfalls zuschaltbares Vorfilter 16 einer Ultrafiltrationseinheit 17 zugeführt. In der Ultrafiltrationseinheit 17 wird laufend Permeat entzogen. Das Retentat wird über die Leitung 18 zurück in den Behälter 13 geführt (Ultrafiltrationskreislauf B).

Aus der Ultrafiltrationseinheit 17 erhaltenes Permeat wird über die Leitung 19 abgezogen und über den Boden 3 der Spritzkabine 1 in den Kreislauf A zurückgeführt.

Von der Leitung 18 zweigt eine Leitung 20 ab, durch die im Kreislauf umlaufende Flüssigkeit des Kreislaufs B (Retentat) in einen weiteren Ultrafiltrationskreislauf C eingeführt werden kann. Beispielsweise kann die Leitung 20 zu einem Behälter 21 führen, der zur Aufnahme von Ultrafiltrations-Retentat bestimmt ist. Die aus der Leitung 20 kommende Flüssigkeit wird mit der im Behälter 21 enthaltenen Kreislaufflüssigkeit vermischt.

Aus dem Behälter 21 wird das Ultrafiltrations-Retentat zusammen mit der aus dem Kreislauf B eingeführten Flüssigkeit über die Leitung 22, mittels einer Pumpe 23 und über ein gegebenenfalls zuschaltbares Vorfilter 24 einer Ultrafiltrationseinheit 25 zugeführt. In der Ultrafiltrationseinheit 25 wird laufend Permeat entzogen. Das Retentat wird über die Leitung 26 zurück in den Behälter 21 geführt.

Aus der Ultrafiltrationseinheit 25 erhaltenes Permeat wird über die Leitung 27 abgezogen und über den Boden 3 der Spritzkabine 1 in den Kreislauf A zurückgeführt.

Von der Leitung 26, die Ultrafiltrations-Retentat aus der Ultrafiltrationseinheit 25 in den Behälter 21 zurückführt, zweigt eine zuschaltbare Leitung 28 ab, die einen Teil des bei der Ultrafiltration erhaltenen Konzentrats beispielsweise zu einer Nachfüllvorrichtung zur Wiederaufbereitung des Überzugsmittels führt.

Bei einer bevorzugten Verfahrensweise mit 3 Kreisläufen nimmt im Kreislauf (A), welcher das Kabinenumlaufsystem darstellt, die Auswaschflüssigkeit Overspray auf und wird kontinuierlich dem Kreislauf (B), einem Ultrafiltrationskreislauf, zugeführt. Gleichzeitig nimmt der Kreislauf (A) kontinuierlich wäßriges Permeat aus den Kreisläufen (B) und (C) auf. Durch das Verhältnis der Aufnahmemenge von Overspray zur Abgabemenge an den Kreislauf (B) kann der Festkörpergehalt im Kreislauf (A) annähernd konstant gehalten werden, beispielsweise bei einem Wert von 1 bis 5 Gew.-%, vorzugsweise bei einem Wert von 1 bis 1,5 Gew.-%, besonders bevorzugt von etwa 1,5 Gew.-%.

Im Ultrafiltrationskreislauf (B) wird die mit Overspray angereicherte Auswaschflüssigkeit einer Ultrafiltration unterzogen, wobei einerseits wäßriges Permeat an den Kreislauf (A) zurückgeführt wird und andererseits im Ultrafiltrationskreislauf (B) ultrafiltriertes Overspray einem weiteren Ultrafiltrationskreislauf (C) zugeführt wird. Im Kreislauf (B) wird der Festkörpergehalt der mit Overspray angereicherten Auswaschflüssigkeit bevorzugt bei 8 bis 16 Gew.-% ultrafiltriert; die in den Kreislauf (B) geführte Flüssigkeit wird bevorzugt auf einem konstanten Wert, bevorzugt aus diesem Bereich gehalten. Das Permeat aus dem Kreislauf (B), das beispielsweise einen Festkörpergehalt in der Größenordnung der vorstehend als Beispiele für den Kreislauf (A) angegebenen Werte, z.B. bis zu 1,5 Gew.-% aufweisen kann, wird zur Auffüllung der Auswaschflüssigkeit in den Kreislauf (A) zurückgeführt.

Das im Kreislauf (B) erhaltene Retentat wird einem weiteren Ultrafiltrationskreislauf(C) zugeführt. Es wird beispielsweise in einer Teilmenge aus dem Kreislauf (B) abgezogen, die der Zufuhr von mit Overspray angereicherter Auswaschflüssigkeit aus dem Kreislauf (A) entspricht.

Im Ultrafiltrationskreislauf (C) wird aus dem Kreislauf (B) abgezogenes Retentat einer weiteren Ultrafiltration unterworfen. Dabei wird bevorzugt so gearbeitet, daß die in dem Ultrafiltrationskreislauf (C) umlaufende Flüssigkeit auf einem Festkörpergehalt gehalten wird, der bei 15 Gew.-% bis zu dem Festkörpergehalt liegt, der sich bei Spritzviskosität des eingesetzten Überzugsmittels ergibt oder der nach dem Mischen mit dem Nachfüllkonzentrat die Spritzviskosität des eingesetzten Überzugsmittels ergibt. Der Festkörpergehalt im Kreislauf (C) wird bevorzugt bei einem konstanten Wert gehalten.

Das im Kreislauf (C) erhaltene wäßrige Permeat kann wieder dem Kreislauf (A) zugeführt werden. Besonders bevorzugt wird der Festkörpergehalt des Permeats so niedrig wie möglich gehalten, um ein Austragen von Komponenten des Überzugsmittels durch die Abluft zu vermeiden.

Bei der im Ultrafiltrationskreislauf (C) umlaufenden Flüssigkeit handelt es sich entweder um das zum Spritzauftrag verwendete wäßrige Überzugsmittel im spritzfertigen Zustand, oder in einer mit Wasser verdünnten Form. Die im Ultrafiltrationskreislauf (C) umlaufende Flüssigkeit kann somit entweder direkt den Spritzaggregaten in der Spritzkabine zugeführt werden, oder nach einer Aufbereitung. Zur Aufbereitung kann gemäß einer bevorzugten Ausführungsform ein Teil der im Ultrafiltrationskreislauf (C) umlaufenden Flüssigkeit mit frischem Nachfüllkonzentrat des wäßrigen Überzugsmittels und gegebenenfalls Wasser und/oder gegebenenfalls anderen Überzugsmittel-Bestandteilen vermischt werden.

Das Vermischen mit anderen Überzugsmittelbestandteilen erfolgt insbesondere dann, wenn im Gleichgewichtskonzentrat nicht sämtliche Komponenten bestimmt wurden und daher auch nur ein entsprechender Teil der darin enthaltenen Komponenten den Kreislaufflüssigkeiten zugesetzt wurde. Eine solche Arbeitsweise ist besonders dann günstig, wenn einzelne Bestandteile des Gleichgewichtspermeats leicht analytisch im Gesamtüberzugsmittel feststellbar sind und nachträglich beigemischt werden können, wie z.B. Amine oder Lösemittel.

Das Vermischen kann gegebenenfalls in einer eigenen Mischvorrichtung erfolgen. Gemäß einer weiteren bevorzugten Ausführungsform können das Nachfüllkonzentrat und gegebenenfalls Wasser und/oder gegebenenfalls andere Überzugsmittel-Bestandteile, gegebenenfalls über eine Mischvorrichtung, in die im letzten Ultrafiltrationskreislauf, beispielsweise Kreislauf (C), umlaufende Flüssigkeit dosiert werden, wodurch es möglich wird, die Spritzaggregate direkt mit der im letzten Ultrafiltrationskreislauf umlaufenden Flüssigkeit zu versorgen.

Das Nachfüllkonzentrat für das wäßrige Überzugsmittel kann mit Retentat aus dem letzten Kreislauf auf Spritzviskosität gemischt und zur Spritzapplikation geleitet werden.

Die Kabinenwände werden für eine optimale Aufnahme des Oversprays bevorzugt mit verdünntem wäßrigem Überzugsmittel, gegebenenfalls in mit Permeat gemischter Form, berieselt. Lediglich im Verfahren, beispielsweise durch Verdunstung, entzogenes Wasser wird durch entsalztes Wasser ersetzt.

Das erfindungsgemäße Verfahren kann mit üblichen Vorrichtungen durchgeführt werden, so daß es keiner speziellen Umstellung bereits vorhandener Einrichtungen bedarf.

Die erfindungsgemäß eingesetzten Spritzkabinen sind übliche Spritzkabinen. Sie können mit üblichem Zuluft- und Abluft-Kreislauf betrieben werden. Die einsetzbaren Spritzkabinen können beispielsweise mit mindestens einer Naßrieselwand oder mit einer Venturi-Auswaschung, wie sie insbesondere bei der Kraftfahrzeuglackierung üblich ist, ausgestattet sein. Im Falle von Naßrieselwänden können auch sämtliche Wandungen als Naßrieselwände ausgebildet sein. Sind Naßrieselwände vorhanden, so dient die Auswaschflüssigkeit als Berieselungsflüssigkeit. Die Auswaschflüssigkeit kann beispielsweise am Boden der Spritzkabine gesammelt und im Kreislauf zur erneuten Berieselung der Naßrieselwände oder zur erneuten Venturi-Auswaschung zurückgeführt werden. Derartige Spritzkabinen sind dem Fachmann geläufig. In ihnen erfolgt der Kabinenkreislauf, z.B. Kreislauf (A).

Im ersten Ultrafiltrationskreislauf, z.B. im Kreislauf (B), und in den weiteren Kreisläufen werden übliche Ultrafiltrationseinheiten eingesetzt. Das wäßrige Überzugsmittel im ersten Ultrafiltrationskreislauf wird durch die Ultrafiltrationseinheit zyklisiert, beispielsweise über einen Behälter für das Ultrafiltrations-Retentat (das hier auch als Konzentrat bezeichnet wird), der beheizbar oder kühlbar sein kann. Aus diesem Behälter wird das Ultrafiltrations-Retentat zur Ultrafiltrationseinheit zurückgeführt. Der Ultrafiltrationseinheit kann ein Vorfilter zur Entfernung gröberer Verunreinigungen vorgeschaltet werden. Aus dem Kabinenkreislauf abgezweigtes, mit Overspray angereichertes wäßriges Überzugsmittel wird dem ersten Ultrafiltrationskreislauf zugeführt, beispielsweise in den Behälter für Ultrafiltrations-Konzentrat.

In gleicher Weise kann aus dem ersten Ultrafiltrationskreislauf abgezweigte umlaufende Flüssigkeit beispielsweise einem oder mehreren weiteren Kreisläufen zugeführt werden. Das wäßrige Permeat aus den Ultrafiltrationskreisläufen kann aus den Filtrationseinheiten direkt in den Kabinenkreislauf zurückgeführt werden, beispielsweise in den Boden der Spritzkabine, der wannenförmig ausgebildet sein kann.

Die Ultrafiltration ist dem Fachmann bekannt. Sie kann mit üblichen Einheiten durchgeführt werden. Dieses Filtrierverfahren wird sowohl in DE-C2-21 58 668, DE-B2-22 29 677, EP-A1-0 127 685, EP-A1-0 137 877, US-A-3 663 405, US-A-3 663 406 beschrieben als auch beispielsweise von Wilhelm R.A. Vauck und Hermann A. Müller, in "Grundoperationen chemischer Verfahrenstechnik" Verlag Chemie, 1982, Seite 153 bis 155, von Robert Rautenbach und Rainer Albrecht, in "Grundlagen der chemischen Technik, Membrantrennverfahren, Ultrafiltration und Umkehrosmose" Otto Salle Verlag und Verlag Sauerländer, 1981, und von Thomas D. Brock, in "Membrane Filtration" Springer Verlag, 1983. Die Porenweite der Ultrafiltrationsmembranen liegt beispielsweise zwischen 0,1 und 1000 Nanometer. Für die Ultrafiltration von wäßrigen Überzugsmitteln werden beispielsweise Membranen mit Porengröße unter 100 Nanometer verwendet.

Wenn die Messungen von niedrigen Porenweiten ungenau sind, kann gebräuchlicherweise das "molecular weight cut-off" angegeben werden.

Für das erfindungsgemäße Verfahren werden bei der Ultrafiltration keine hohen Drücke benötigt. Als Mindestdruck ist ein Druck erforderlich, mit dem Wasser und niedrigmolekulare Substanz in meßbarer Geschwindigkeit durch die Membrane gepreßt werden. Derartige Drücke liegen beispielsweise bei 0,7 bis 11 bar, vorzugsweise in der Größenordnung von 5 bar.

Eventuelle Änderungen in den Massenverhältnissen der nicht ins Permeat gelangenden Komponenten und der ins Permeat gelangenden Komponenten, z.B. bei unbeabsichtigtem Verlust von Ultrafiltrat, können gegebenenfalls durch geeignete Rezeptur des Nachfüllkonzentrats für die wäßrigen Überzugsmittel ausgeglichen werden.

Während des Verfahrens eventuell eingeschleppte Elektrolyte können mit Hilfe von Ionenaustauschern aus dem Permeat entfernt werden, wobei die dem Fachmann bekannten Methoden angewendet werden können.

Das erfindungsgemäße Verfahren kann mit wasserverdünnbaren Überzugsmitteln durchgeführt werden, wie sie dem Fachmann geläufig sind. Geeignet sind beispielsweise wasserverdünnbare Lacke, wie sie beispielsweise für die Auto- und Kraftfahrzeugserienlackierung verwendet werden. Geeignet sind jedoch auch wasserverdünnbare Füller, wie sie beispielsweise ebenfalls in der Autoserienlackierung eingesetzt werden.

Das erfindungsgemäße Verfahren wird bevorzugt an wäßrigen Überzugsmitteln durchgeführt, die einen Festkörpergehalt von 10 bis 80 Gew.-%, besonders bevorzugt 35 bis 80 Gew.-%, aufweisen.

Die Bestimmung der Festkörpergehalte von wäßrigen Überzugsmitteln sowie in den einzelnen Kreisläufen kann beispielsweise nach DIN 53 216 durchgeführt werden.

Die wasserverdünnbaren Überzugsmittel, beispielsweise wasserverdünnbaren Lacke und Füller, können gegebenenfalls Pigmente und/oder Füllstoffe enthalten, sie können jedoch auch als Klarlacke formuliert sein. Sie können organische Lösemittel enthalten oder frei von organischen Lösemitteln sein.

Die für das Verfahren einsetzbaren, wasserverdünnbaren Überzugsmittel können, wie erwähnt, transparent oder pigmentiert sein. Sie können gegebenenfalls Füllstoffe, lacktübliche Additive, Koaleszenzmittel, flüchtige organische Flüssigkeiten oder sonstige übliche Lackrohstoffe enthalten. Sie können physikalisch oder chemisch trocknend sein. Es kann sich um selbstvernetzende oder fremdvernetzende Systeme, beispielsweise für Einbrennlacke, handeln.

Wasserverdünnbare Lacke, die beim erfindungsgemäßen Verfahren eingesetzt werden können, sind z.B. wäßrige Dispersionen. Es kann sich dabei um Systeme mit feiner Verteilung, beispielsweise von Polymeren bzw. Kunstharzen in Wasser auf Basis von Homopolymeren oder Copolymeren von Styrol, Vinylchlorid, Vinylacetat, Maleinsäureanhydrid, Maleinsäureester, Maleinsäurehalbester, Vinylpropionat, (Meth-)Acrylsäure und deren Ester, Amide und Nitrile handeln. Beispiele für derartige wäßrige Überzugsmittel findet man in dem Lehrbuch der Lacke und Beschichtungen, Herausgeber: Dr. Hans Kittel, Band I, Teil 3, Verlag W.A. Colomb in der H. Heenemann GmbH, 1974, Seite 920 bis 1001 und in Lackkunstharze von Hans Wagner und Hans Friedrich Sarx, Carl Hanser Verlag, München, 1971, Seite 208 bis 242, sowie in A Manual of Resins for Surface Coatings, SITA Technology, London, 1987, Volume II, Seite 249 bis 296.

Weitere Beispiele sind wasserverdünnbare Lacke, die Emulsionen von Polymeren bzw. Kunstharzen darstellen. Sie können beispielsweise in Lösemitteln gelöste oder lösemittelfreie Bindemittel, gegebenenfalls mit Vernetzungsmitteln, emulgiert in Wasser, enthalten. Emulsionen mit besonders feiner Verteilung der Bindemitteltröpfchen werden als Mikroemulsionen bezeichnet.

Die große Gruppe der wasserverdünnbaren Lacke, die mit sogenannten wasserlöslichen Polymeren bzw. Kunstharzen hergestellt werden und als weitere Beispiele für das erfindungsgemäße Verfahren verwendet werden können, enthalten Bindemittel, welche saure oder basische Gruppen tragen, z.B. Carbonsäuregruppen, Carbonsäureanhydridgruppen, Sulfonsäuregruppen, primäre, sekundäre, tertiäre Aminogruppen, Sulfoniumgruppen, Phosphoniumgruppen. Durch Neutralisation oder Teilneutralisation der sauren Gruppen mit basischen Verbindungen, z.B. mit Amin, Alkanolamin, Ammoniak, Natriumhydroxid, Kaliumhydroxid oder der basischen Gruppen mit sauren Verbindungen, z.B. Ameisensäure, Essigsäure, Milchsäure, Alkylphosphorsäure, Kohlensäure, werden die Polymeren bzw. Kunstharze in eine wasserverdünnbare Form gebracht. Die Bindemittelbasis besteht z.B. aus einem oder mehreren Bindemitteln aus der Gruppe der Polyurethanharze, Polyesterharze, Poly(meth)acrylatharze, Epoxidharze, Epoxidharzester, fetten Öle (z.B. Leinöl), synthetischen Öle (z.B. Polybutadienöl).

Beispiele für sogenannte wasserlösliche Lacke sind im Lehrbuch der Lacke und Beschichtungen, Herausgeber: Dr. Hans Kittel, Band I, Teil 3, Verlag W.A. Colomb in der H. Heenemann GmbH, 1974, Seite 879 bis 919 und A Manual of Resins for Surface Coatings, SITA Technology, London, 1987, Volume III, Seite 169 bis 280, sowie EP-A-0 032 554, EP-A-0 270 795, EP-A-0 309 901 zu finden.

Mischungen von wäßrigen Dispersionen mit den sogenannten wasserlöslichen Polymeren bzw. Kunstharzen, die als Hybrid-Systeme bekannt sind, eignen sich ebenfalls für das erfindungsgemäße Verfahren.

Als Vernetzungsmittel für die wäßrigen Überzugsmittel kommen beispielsweise Harnstoffharze, Triazinharze (wie Melaminharze und Benzoguanaminharze), Phenolharze, blockierte Polyisocyanate (wie blockierte Diisocyanate, Triisocyanate, Isocyanurate, Biurete, Prepolymere von Isocyanaten) und Mischungen von verschiedenen Vernetzungsmitteln in Frage.

Das erfindungsgemäße Verfahren eignet sich bevorzugt für wasserverdünnbare Lacke, wie sie z.B. in DE-A-36 28 124, DE-A-36 28 125, DE-A-37 39 332, DE-A-38 05 629, DE-A-38 38 179, EP-A-0 038 127, EP-A-0 089 497, EP-A-0 123 939, EP-A-0 158 099, EP-A-0 226 171, EP-A-0 238 037, EP-A-0 234 361, EP-A-0 298 148, EP-A-0 287 144, EP-A-0 300 612, EP-A-0 315 702, EP-A-0 346 886, EP-A-0 399 427, US-A-4 822 685, US-A-4 794 147 und WO 87/05305 beschrieben und in Form der Spritzapplikationen (manuell, automatisch oder elektrostatisch) für die Autoserienlackierung verwendet werden, und besonders bevorzugt für wasserverdünnbare Füller (Hydrofüller), wie sie z.B. in EP-A-0 015 035, EP-A-0 269 828, EP-A-0 272 524, WO 89/10387 und Wasser-Klarlacke in der Autoserienlackierung, wie sie z.B. in DE 0 266 152 beschrieben werden.

Das erfindungsgemäße Verfahren läßt sich bevorzugt auch auf wasserverdünnbare Steinschlagschutzlacke anwenden, wie sie beispielsweise in DE-A-38 05 629 beschrieben werden. Solche Steinschlagschutzlacke können direkt auf Metallsubstrate oder auf mit üblichen Grundierungsmitteln, z.B. Elektrotauchlack, vorgrundierte Metallsubstrate appliziert und gegebenenfalls mit Füller überlackiert werden. Sie verbessern die Steinschlagfestigkeit von Mehrschicht-Lackierungen.

Durch die vorliegende Erfindung wird ein Verfahren bereitgestellt, das die problemlose praktische Wiederverwertung von Overspray ermöglicht, das bei der Spritzapplikation wäßriger Überzugsmittel anfällt. Das erfindungsgemäße Verfahren ist besonders geeignet zur Anwendung auf die manuelle, automatische oder elektrostatische Spritzapplikation, wie sie insbesondere bei der Autoserienlackierung durchgeführt wird. Es kann daher beispielsweise auf wasserverdünnbare Lacke für die Autoserienlackierung angewendet werden, wie pigmenthaltige Unilacke und effektpigmenthaltige Lacke, z.B. Metalliclacke, und bevorzugt wird es auf wasserverdünnbare Füller (Hydrofüller) sowie auf wasserverdünnbare Klarlacke für die Autoserienlakkierung angewendet. Es ermöglicht eine umweltschonende praktisch 100 %ige Wiederverwendung von Overspray.

**Beispiel**

100 kg wasserverdünnbarer Einbrennlack mit 43 % Festkörpergehalt, in der weiteren Folge kurz als Einbrennlack bezeichnet, bestehend aus

0,56 kg Komponente A (Melaminharz-Vernetzer)

29,40 kg Komponente B (handelsübliches selbstvernetzendes Bindemittel)

3,04 kg Komponente C (handelsübliches fremdvernetzendes Bindemittel)

1,08 kg Dimethylethanolamin (DMEA)

10,00 kg Pigmente (einschließlich Füllstoffe)

1,65 kg 2-Butoxyethanol und

54,27 kg entsalztem Wasser,

wurden im Kreislauf mit einer anfänglichen Fluxrate von 9 1/h durch eine handelsübliche Ultrafiltrationsmembran (Rouleau Membrane Iris 3042 (Polyacrylnitril) der Fa. Rhone Poulenc) ultrafiltriert. Stündlich wurden Permeatanalysen durchgeführt.

Von der vierten zur fünften Stunde blieb das Analysenergebnis konstant. Das Ultrafiltrationsgleichgewicht hatte sich eingestellt. In der gleichen Zeit konsolidierte sich die bis dahin abnehmende Fluxrate. Sie blieb ebenfalls konstant.

Im Gleichgewichtspermeat befanden sich

| | |
|---|---|
| Komponente A: | 0,836 % |
| DMEA | 0,150 % |
| 2-Butoxyethanol | 2,463 % |
| Rest (Wasser) | 96,551 % |
| Summe | 100,000 % |

Die membrandurchlässigen Komponenten mit Ausnahme von DMEA wurden, wie folgt, in die Kreisläufe A und B einer Lackspritzanlage (siehe Zeichnung) eingebracht. In den Kreislauf A wurde eine Mischung, deren Festkörpergehalt 1,8 Gew.-% betrug, aus

0,814 Gew.-% Komponente A

2,400 Gew.-% 2-Butoxyethanol

2,326 Gew.-% Einbrennlack und

94,460 Gew.-% entsalztem Wasser

gegeben.

In den Kreislauf B wurde eine Mischung, deren Festkörpergehalt 15,5 Gew.-% betrug, aus

0,515 Gew.-% Komponente A

1,518 Gew.-% 2-Butoxyethanol

34,884 Gew.-% Einbrennlack

und

63,083 Gew.-% entsalztem Wasser

gegeben.

Bei der vorstehenden Berechnung der in die Kreisläufe A und B einzubringenden Mengen an membrandurchlässigen Komponenten wurde beachtet, daß die im Einbrennlack vorhandenen membrandurchlässigen Komponenten zu berücksichtigen waren. Sie wurden von den aus der Permeatanalyse errechneten Mengen entsprechend abgezogen.

DMEA wurde vorerst nicht berücksichtigt, da die fehlende Menge während des gesamten Produktionsprozesses wegen der leichten titrimetrischen Bestimmung und der leichten Zumischung vor dem Wiedereinsatz zugegeben wurde.

In den Kreislauf C wurde der wäßrige Einbrennlack (Festkörpergehalt 43 Gew.-%) gegeben.

Der Lackbehälter der Lackspritzanlage wurde mit Einbrennlack befüllt. Die Lackierung wurde begonnen und nach 5 Turn-over beendet.

Der rezyklisierte Einbrennlack wies nach 5 Turn-over die gleiche Rheologie auf wie der Einbrennlack zu Beginn der Lackierung. Die lackierten und eingebrannten Bleche zeigten während des Lackiervorgangs die gleiche Haftung, Elastizität und das gleiche Korrosionsschutzverhalten.

**Patentansprüche**

1. Verfahren zur Rückgewinnung des Oversprays von wäßrigen Überzugsmitteln beim Spritzauftrag in Lackspritzanlagen, bei dem das Overspray in einer wäßrigen Auswaschflüssigkeit aufgefangen wird, die kontinuierlich in einem oder mehreren Kreisläufen (A) in die Lackspritzanlage zurückgeführt wird, wobei ein Teil der Overspray enthaltenden Auswaschflüssigkeit aus den Kreisläufen (A) einem oder mehreren Ultrafiltrationskreisläufen (B, C) zugeführt wird, wobei in den Ultrafiltrationskreisläufen Permeat entzogen und zur Ergänzung der Auswaschflüssigkeit in die Kreisläufe (A) zurückgeführt und zumindest ein Teil der im letzten Ultrafiltrationskreislauf (C) umlaufenden Flüssigkeit dem wäßrigen Überzugsmittel wieder zugesetzt oder zu dessen Aufbereitung verwendet wird, dadurch gekennzeichnet, daß bei Beginn des Spritzauftrags die einzelnen Kreisläufe mit wäßrigen Flüssigkeiten gefüllt sind, die zumindest einzelne der membrangängigen Anteile des Überzugsmittels annähernd in einer solchen Konzentration bzw. in solchen Konzentrationsverhältnissen enthalten, die sich beim Betrieb der Lackspritzanlagen unter den üblichen Betriebsbedingungen und Konzentrationen als stationärer Zustand einstellen.

2. Verfahren nach Anspruch 1, dadurch gekennzeichnet, daß die Spritzanlagen-Kreisläufe (A), sowie die Ultrafiltrationskreisläufe (B, C) mit wäßrigen Flüssigkeiten gefüllt werden, die Überzugsmittel enthalten.

3. Verfahren nach Anspruch 2, dadurch gekennzeichnet, daß die einzelnen Kreisläufe unterschiedliche jeweils annähernd konstante Konzentrationen an Überzugsmittel enthalten.

4. Verfahren nach Anspruch 3, dadurch gekennzeichnet, daß die Spritzanlagen-Kreisläufe (A) bei einem Festkörpergehalt von 1 bis 5 Gew.-% und der letzte Ultrafiltrationskreislauf (C) bei einem Festkörpergehalt von 15 Gew.-% bis zu dem Festkörpergehalt, der sich bei Spritzviskosität des wäßrigen Überzugsmittels ergibt, betrieben werden.

5. Verfahren nach Anspruch 3 oder 4, dadurch gekennzeichnet, daß die Spritzanlagen-Kreisläufe (A) bei einem Festkörpergehalt im Bereich von 1 bis 1,5 Gew.-% betrieben werden und mit zwei Ultrafiltrationskreisläufen gekoppelt sind, wobei der erste Ultrafiltrationskreislauf (B) bei einem Festkörpergehalt im Bereich von 8 bis 16 Gew.-% betrieben wird und der zweite Ultrafiltrationskreislauf (C), dem ein Teil der umlaufenden Flüssigkeit aus dem Ultrafiltrationskreislauf (B) zugeführt wird, bei einem Festkörpergehalt von 15 Gew.-% bis zu dem Festkörpergehalt, der sich bei Spritzviskosität des wäßrigen Überzugsmittels ergibt, betrieben wird.

6. Verfahren nach einem der vorhergehenden Ansprüche, dadurch gekennzeichnet, daß zum Auffüllen der Kreisläufe Überzugsmittel, verdünnt mit Gleichgewichtspermeat und gegebenenfalls Wasser, verwendet wird.

7. Verfahren nach einem der Ansprüche 1 bis 5, dadurch gekennzeichnet, daß zum Auffüllen der Kreisläufe Überzugsmittel, verdünnt mit einer Lösung von zumindest einzelnen der im Gleichgewichtspermeat enthaltenen membrangängigen Bestandteile, verwendet wird.